# EUROPÄISCHE PATENTSCHRIFT

(11) **EP 2 748 383 B1**
(45) Veröffentlichungstag und Bekanntmachung des Hinweises auf die Patenterteilung: **19.08.2015**
(21) Anmeldenummer: 12735580.8
(22) Anmeldetag: 19.07.2012
(51) Int. Cl.: E04B 1/80, E06B 3/67, E06B 3/677, F16L 59/065

(54) **ISOLIERVERGLASUNG MIT WÄRMESCHUTZISOLIERPANEEL**
INSULATING GLAZING WITH THERMAL PROTECTION INSULATING PANEL
VITRAGE ISOLANT DOTÉ D'UN PANNEAU À ISOLATION THERMIQUE

(30) Priorität: 26.08.2011 EP 11178971
(43) Veröffentlichungstag der Anmeldung: 02.07.2014
(73) Patentinhaber: Saint-Gobain Glass France, 92400 Courbevoie (FR)
(72) Erfinder: SCHREIBER, Walter, 52074 Aachen (DE); FRANK, Katrin, 52070 Aachen (DE)
(74) Vertreter: Lendvai, Tomas
(86) Internationale Anmeldenummer: PCT/EP2012/064204
(87) Internationale Veröffentlichungsnummer: WO 2013/029871

(56) Entgegenhaltungen:
- DE-A1- 4 319 763
- DE-A1- 4 339 435
- DE-A1- 10 034 764
- DE-A1- 19 923 057
- DE-B3-102010 010 493

## Beschreibung

Die Wärmeleitfähigkeit von Glas ist etwa um den Faktor 2 bis 3 niedriger als die von Beton oder ähnlichen Baustoffen. Gebäude verlieren daher häufig den größten Wärmeanteil über die Außenverglasung. Besonders deutlich wird dieser Effekt bei Hochhäusern mit teilweisen oder kompletten Glasfassaden. Ein wichtiger Lösungsansatz hierfür sind Isolierverglasungen. Isolierverglasungen sind vor allem im Zuge immer schneller steigender Rohstoffpreise und strengeren Umweltschutzauflagen nicht mehr aus dem Gebäudebau wegzudenken. Isolierverglasungen machen daher einen zunehmend größeren Teil der nach außen gerichteten Verglasungen aus. Isolierverglasungen enthalten in der Regel mindestens zwei Scheiben aus Glas oder polymeren Materialien. Die Scheiben sind über einen vom Abstandshalter (Spacer) definierten Gas- oder Vakuumraum voneinander getrennt. Das Wärmedämmvermögen von Isolierglas ist deutlich höher als Einfachglas und kann in Dreifachverglasungen oder mit speziellen Beschichtungen noch weiter gesteigert und verbessert werden. Neben der wichtigen Eigenschaft der Wärmeisolierung spielen im Bereich der Gebäudeverglasung zunehmend auch optische und ästhetische Merkmale eine wichtige Rolle.

Insbesondere bei Gebäuden mit einer großflächigen Glasaußenfassade spielt die Isolierwirkung nicht nur aus Kostengründen eine wichtige Rolle. Da die Wärmedämmung von dem in der Regel im Vergleich zum Mauerwerk sehr dünnem Glas schlechter ist, sind Verbesserungen in diesem Bereich notwendig. Um den Gesamteindruck des Gebäudes nicht zu beeinträchtigen, sind Kombinationen von gut isolierendem Mauerwerk und Glaselementen meist nicht ohne weiteres möglich. Eine möglicher Lösungsansatz sind Isolierglasscheiben mit im Zwischenraum der Scheiben befindlichen Isolationselementen. Die Isolationselemente enthalten unterschiedliche wärmedämmende Materialien und Dämmstoffe. Häufig sind die Dämmstoffe in gas- und feuchtigkeitsdichten Folien verpackt. Das gesamte Isolierelement wird anschließend evakuiert. Diese Isolationselemente weisen eine deutlich geringere Wärmeübertragung auf als reine Isolierverglasung. Vor allen in Bereichen, wo die Transparenz der Isolierverglasung nicht notwendig ist, kann die Wärmedämmung eines Gebäudes deutlich erhöht werden, ohne den Gesamteindruck der Fassade zu stören.

Die Integration der Isolationselemente in der Isolierverglasung ist jedoch nicht problemlos möglich. Häufig sind die Isolierverglasungen nicht vollständig mit den Isolationselementen ausgefüllt und es bilden sich Leerräume. Diese Leerräume entstehen durch Maßtoleranzen oder durch die Verwendung von mehreren Isolationselementen in einer Isolierverglasung. Besonders größere Außenfassadenelemente benötigen mehrere Isolationselemente und erzeugen somit fast zwangsläufig Leerräume.

Neben der Wärmedämmung spielt auch die akustische Dämmung eine zunehmend wichtigere Rolle. Vor allem der durch ein steigendes Verkehrsaufkommen erzeugte Straßenlärm wirkt sich negativ auf die Lebens- und Wohnqualität innerhalb eines Gebäudes aus. Analog zur Wärmedämmung ist auch die akustische Dämmwirkung von Glasscheiben deutlich niedriger als beispielsweise Stein oder Beton.

DE 40 29 405 A1 offenbart den Aufbau und die Zusammensetzung von Wärme isolierenden Formkörpern. Dazu wird ein pulver- oder faserförmiger Stoff in eine mikroporöse Umhüllung eingefüllt und getrocknet. Anschließend wird die mikroporöse Umhüllung in eine gas- und feuchtigkeitsdichte Folie eingebracht und gegebenenfalls evakuiert.

DE 43 19 763 A1 offenbart ein evakuiertes lichtundurchlässiges Mehrscheiben-Isolierglas-Paneel. Der Scheibenzwischenraum wird mit einem mikro- oder nanokristallinen Pulver gefüllt und anschließend evakuiert.

DE 43 39 435 A1 offenbart ein lichtundurchlässiges Mehrschichtscheibenpaneel für Gebäudefassaden, Zwischenwände und Kühlräume. Innerhalb einer Isolierverglasung ist mindestens ein plattenartiger, evakuierter Formkörper angeordnet.

DE 100 34 764 A1 offenbart ein Paneel mit einer inneren und äußeren Scheibe und einem wasser-, dampf- und gasdichten Randverbund. Der Zwischenraum enthält ein wärmedämmendes Pulver, welches sich in einem evakuierten Sack befindet. DE 10 2010 010 493 B3 beschreibt ein weiteres Vakuum-Isolations-Paneel aus dem Stand der Technik.

Die Aufgabe der Erfindung liegt darin, eine Isolierverglasung bereitzustellen, welche sowohl wärmeisolierende als auch schallisolierende Wirkung miteinander vereinbart und vergleichbare Eigenschaften wie Bauelemente aus Stein, Putz oder Beton aufweist.

Die Aufgabe der vorliegenden Erfindung wird erfindungsgemäß durch eine schallgedämpfte Isolierverglasung gemäß Anspruch 1 gelöst. Bevorzugte Ausführungen gehen aus den Unteransprüchen hervor.

Ein erfindungsgemäßes Verfahren zur Herstellung einer schallgedämpften Isolierverglasung sowie deren Verwendung gehen aus weiteren nebengeordneten Ansprüchen hervor.

Die erfindungsgemäße schallgedämpfte Isolierverglasung umfasst mindestens eine erste Scheibe und eine zweite Scheibe. Ein umlaufender Abstandshalter (Spacer) befindet sich zwischen der ersten Scheibe und der zweiten Scheibe. Der Abstandshalter enthält bevorzugt Hohlräume. Die Hohlräume des Abstandshalters enthalten bevorzugt ein Trockenmittel, besonders bevorzugt Kieselgel, CaCl₂, Na₂SO₄, MgSO₄, Aktivkohle, Silikate, Bentonite, Zeolithe und/oder Gemische davon. Die Trockenmittel sind bevorzugt so angeordnet, dass ein Gas- und Feuchtigkeitsaustausch mit der Atmosphäre im Inneren der Isolierverglasung möglich ist, die Materialien aber nicht umherfliegen können und fixiert sind. Dies kann bevorzugt durch Einschließen der Trockenmittel in einen luft- und feuchtigkeitsdurchlässigen Polymerfilm oder in einem feinmaschigen Netz erfolgen. Die Scheibe enthält bevorzugt Flachglas, Floatglas, Quarzglas, Borosilikatglas, Kalk-Natron-Glas und/oder Gemische davon. Alternativ kann die Scheibe auch Polymere wie Polycarbonat oder Polymethylmethacrylat (Plexiglas) umfassen. Eine Dichtung schließt einen äußeren Zwischenraum, Lücke oder Fuge zwischen der ersten Scheibe, dem Abstandshalter und der zweiten Scheibe ab. Die erste Scheibe und die zweite Scheibe können gleich oder unterschiedlich dimensioniert sein. In einer bevorzugten Ausführungsform kann eine der beiden Scheiben als Verbundglasscheibe ausgelegt sein, sodass sich insgesamt eine Dreifachverglasung ergibt. Alternativ können auch beide Scheiben als Verbundglasscheiben ausgelegt sein und eine Vierfachverglasung bilden. Ein Vakuumisolierpaneel ist zwischen der ersten Scheibe und der zweiten Scheibe angeordnet. Das Vakuumisolierpaneel umfasst ein faser- oder pulverförmiges Substrat, das in einer gas- und feuchtigkeitsdichten Folie verpackt und evakuiert wird. Beispiele für pulverförmige Substrate finden sich beispielsweise in der DE 4029405 A1. Zwischen der ersten Scheibe und dem Vakuumisolierpaneel (auf der Oberfläche der Vakuumisolierpaneele oder mehrerer benachbarter Vakuumisolierpaneelen) ist eine akustische Isolierplatte flächig oder plan angeordnet. Die akustische Isolierplatte umfasst bevorzugt schallisolierende Polymerplatten, bevorzugt Polymerplatten, welche bei einer Dicke von mindestens 50 mm eine Schallabsorptionsfähigkeit von mindestens 0,5 (nach ISO-10534-2, gemessen im Bereich von 600 Hz bis 4000 Hz) aufweisen.

Die erfindungsgemäße Isolierverglasung enthält bevorzugt zwei oder mehrere Vakuumisolierpaneele. Die Anzahl der Vakuumisolierpaneele richtet sich vor allem nach der Größe der Isolierverglasung. Zwischen den Vakuumisolierpaneelen ist bevorzugt eine akustische Trennplatte angeordnet. Die akustische Trennplatte umfasst bevorzugt dasselbe Material wie die akustische Isolierplatte. Die akustische Trennplatte füllt bevorzugt den Zwischenraum zwischen zwei Vakuumisolierpaneelen aus.

Die akustische Isolierplatte ist bevorzugt zusätzlich zwischen der zweiten Scheibe und dem Vakuumisolierpaneel, zwischen dem Abstandshalter und dem Vakuumisolierpaneel und/oder zwischen dem Abstandshalter und der ersten Scheibe angeordnet. Die akustische Isolierplatte kann somit alle Außenflächen des Vakuumisolierpaneels gegenüber den Scheiben oder den Abstandshaltern ausfüllen und abdecken. Eine maximale Ausfüllung der Zwischenräume erhöht ganz wesentlich die Schallisolation und auch die Wärmeisolation.

Die akustische Isolierplatte weist bevorzugt eine Dicke von 0,5 mm bis 5 mm auf. Die Dicke der akustischen Isolierplatte richtet sich bevorzugt nach der Größe des Zwischenraums zwischen den Vakuumisolierpaneelen und der ersten Scheibe oder der zweiten Scheibe.

Die akustische Isolierplatte und/oder die akustische Trennplatte enthalten bevorzugt thermoplastische, elastische oder duroplastische Polymerschäume, bevorzugt Polystyrol, Polyurethane, Polyethylen, Polyvinylchlorid, Melaminharz, PUR-Weich (weicher Polyurethanschaum) und/oder PUR-Hart (harter Polyurethanschaum) oder Gemische und/oder Copolymere davon.

Das Vakuumisolierpaneel enthält bevorzugt ein Füllmittel, besonders bevorzugt Pulver, Fasern oder Federn, insbesondere bevorzugt SiO₂ oder ein Aerogelpulver. Das Füllmittel verbessert zusammen mit der Evakuierung des Vakuumisolierpaneels die Isolationswirkung.

Das Füllmittel weist bevorzugt einen mittleren Durchmesser von 10 nm bis 100 µm auf. Eine enge Größenverteilung und homogene geometrische Form des Füllmittels verbessert die Isolationswirkung des Vakuumisolierpaneels.

Das Vakuumisolierpaneel ist bevorzugt in eine gas- und feuchtigkeitsdichte Folie eingeschweißt. Eine Undichtigkeit innerhalb des Vakuumisolierpaneels bewirkt eine Reduzierung der Wärmeisolation.

Die Dichtung enthält bevorzugt Polymere oder silanmodifizierte Polymere, besonders bevorzugt organische Polysulfide, Silikone, RTV (raumtemperturvernetzenden)-Silikonkautschuk, HTV-(hochtemperturvernetzenden) Silikonkautschuk, peroxidischvernetzten-Silikonkautschuk und/oder additionsvernetzten-Silikonkautschuk, Polyurethane, Buthylkautschuk, Polyacrylate und/oder Gemische oder Copolymere davon.

Die Dichtung weist bevorzugt eine Dicke von 1 mm bis 5 mm und/oder eine Höhe von 15 mm bis 30 mm auf. Die Abmessungen der Dichtung richten sich bevorzugt nach der Dimensionierung des Abstandshalters.

Der Abstandshalter enthält bevorzugt ein Trockenmittel, besonders bevorzugt Kieselgel, CaCl₂, Na₂SO₄, Aktivkohle, Silikate, Bentonite, Zeolithe und/oder Gemische davon. Das Trockenmittel kann mit der Zeit in die Isolierverglasung eindringende Feuchtigkeit binden und ein Beschlagen der inneren Scheibenflächen verhindern.

Die Erfindung umfasst des Weiteren ein Verfahren zur Herstellung einer schallgedämpften Isolierverglasung. In einem ersten Schritt wird ein Abstandshalter (Spacer) umlaufend auf dem Rand einer ersten Scheibe angeordnet. Anschließend wird eine akustische Isolierplatte innerhalb des Abstandshalters auf der ersten Scheibe angeordnet. Die akustische Isolierplatte umfasst bevorzugt wie voranstehend erläutert eine Polymerschaumstoffplatte, besonders bevorzugt Polymerschaumstoffplatten, die bei einer Dicke von mindestens 50 mm eine Schallabsorptionsfähigkeit von mindestens 0,5 (nach ISO-10534-2, gemessen im Bereich von 600 Hz bis 4000 Hz) aufweisen. In einem nächsten Schritt wird ein Vakuumisolierpaneel auf der akustischen Isolierplatte angeordnet. Abschließend wird eine zweite Scheibe auf dem Abstandshalter angeordnet und zusammen mit einer Dichtung in einem äußeren Zwischenraum, Lücke oder Fuge zwischen der ersten Scheibe, dem Abstandshalter und der zweiten Scheibe zu einer Isolierverglasung verbunden. Die abschließende Herstellung der Isolierglasscheibe erfolgt bevorzugt in der dem Fachmann geläufigen Art und Weise.

Die Erfindung umfasst des Weiteren die Verwendung der erfindungsgemäßen Isolierverglasung in Gebäuden, besonders bevorzugt in Innen- und Außenfassaden. Die erfindungsgemäße Isolierverglasung wird bevorzugt in nicht transparenten Außenfassaden oder in Mischfassaden aus transparenten und nicht transparenten Elementen verwendet.

Im Folgenden wird die Erfindung anhand von Zeichnungen näher erläutert. Die Zeichnung ist eine rein schematische Darstellung und nicht maßstabsgetreu. Sie schränkt die Erfindung in keiner Weise ein.

Es zeigen:
Figur 1 einen Querschnitt einer erfindungsgemäßen Isolierverglasung,
Figur 2 einen Querschnitt einer bevorzugten Ausführungsform der erfindungsgemäßen Isolierverglasung und
Figur 3 ein Fliesschema des Verfahrens zur Herstellung der erfindungsgemäßen Isolierverglasung.

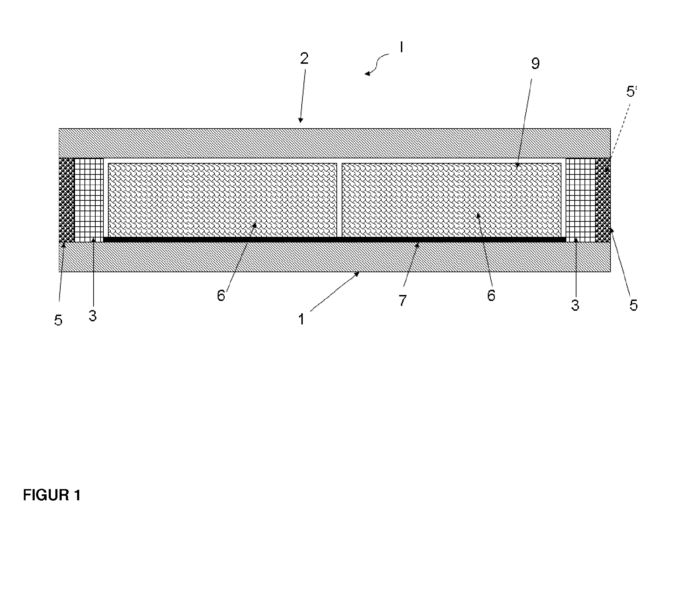

Figur 1 zeigt einen Querschnitt einer erfindungsgemäßen Isolierverglasung (I). Zwischen einer ersten Scheibe (1) und einer zweiten Scheibe (2) ist ein umlaufender Abstandshalter (3) angeordnet. Der äußere Rand zwischen der ersten Scheibe (1), zweiten Scheibe (2) und dem Abstandshalter wird von einer Dichtung (5) abgeschlossen und versiegelt. Die Dichtung (5) befindet sich in einer Lücke (5') zwischen der ersten Scheibe (1), dem Abstandshalter (3) und der zweiten Scheibe (2). Innerhalb des Abstandshalters (3) sind zwei Vakuumisolierpaneelen (6) angeordnet. Die Vakuumisolierpaneelen (6) sind über eine gasund feuchtigkeitsdichte Folie (9) verschlossen. Die Isolationswirkung der Vakuumisolierpaneelen (6) ist wesentlich von dem Vakuum und damit von der Dichtheit der gas- und feuchtigkeitsdichten Folie (9) abhängig. Eine akustische Isolierplatte (7) vermindert die Schalldurchlässigkeit der erfindungsgemäßen Isolierverglasung (I) deutlich gegenüber einer Isolierverglasung nach dem Stand der Technik.

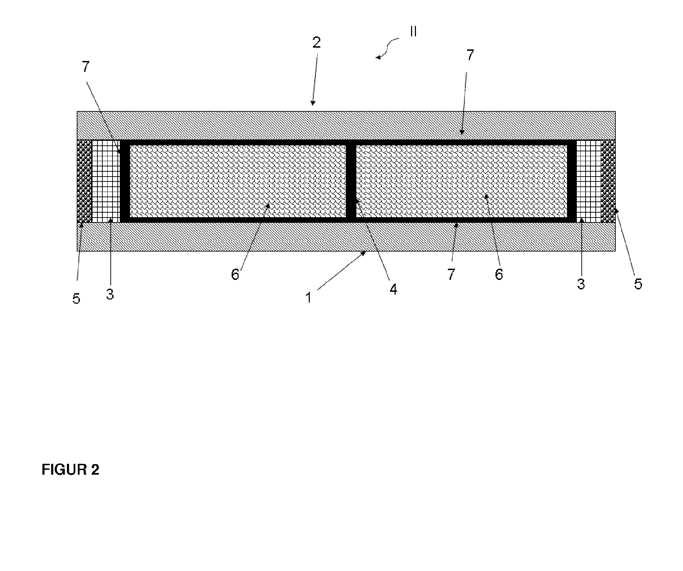

Figur 2 zeigt einen Querschnitt einer bevorzugten Ausführungsform der erfindungsgemäßen Isolierverglasung (II). Der Grundaufbau der Isolierverglasung (II) entspricht dem in Figur 1 gezeigten. Alle Zwischenräume zwischen der Vakuumpaneele (6) und der ersten Scheibe (1), der zweiten Scheibe (2) und dem Abstandshalter (3) sind mit akustischen Isolierplatten (7) und akustischen Trennplatten (4) ausgefüllt. Die akustische und auch die thermische Isolation sind bei dieser gezeigten bevorzugten Ausführungsform der Isolierverglasung (II) auch gegenüber der in Figur 2 gezeigten Ausführungsform der Isolierverglasung (I) deutlich erhöht.

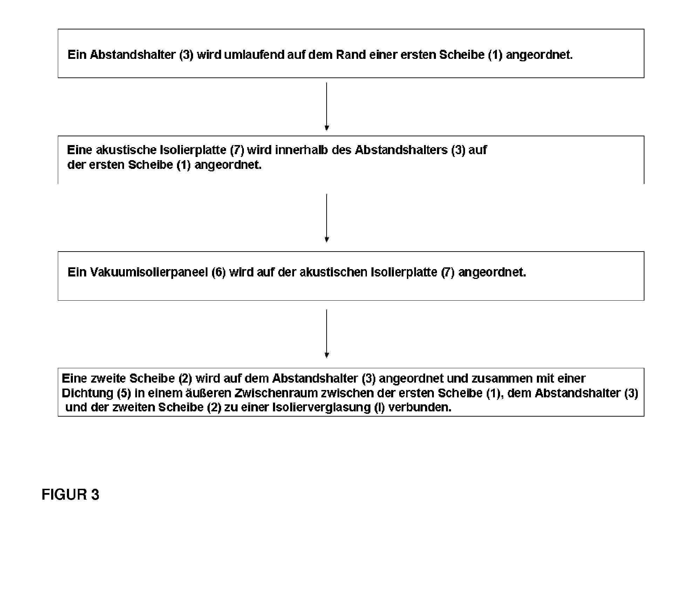

Figur 3 zeigt ein Fliesschema des Verfahrens zur Herstellung der erfindungsgemäßen Isolierverglasung (II). In einem ersten Schritt wird ein Abstandshalter (Spacer) (3) umlaufend auf dem Rand einer ersten Scheibe (1) angeordnet. Anschließend wird eine akustische Isolierplatte (7) innerhalb des Abstandshalters (3) auf der ersten Scheibe (1) angeordnet. In einem nächsten Schritt wird ein Vakuumisolierpaneel (6) auf der akustischen Isolierplatte (7) angeordnet. Abschließend wird eine zweite Scheibe (2) auf dem Abstandshalter (3) angeordnet und zusammen mit einer Dichtung (5) in einem äußeren Zwischenraum zwischen der ersten Scheibe (1), dem Abstandshalter (3) und der zweiten Scheibe (2) zu einer Isolierverglasung (II) verbunden.

### Bezugszeichenliste

- (1): erste Scheibe
- (2): zweite Scheibe
- (3): Abstandshalter
- (4): akustische Trennplatte
- (5): Dichtung
- (5'): Lücke, Fuge oder Zwischenraum zwischen der ersten Scheibe (1), dem Abstandshalter (3) und der zweiten Scheibe (2)
- (6): Vakuumisolierpaneel
- (7): Akustische Isolierplatte
- (I, II): erfindungsgemäße Isolierverglasungen

## Patentansprüche

1. Schallgedämpfte Isolierverglasung mindestens umfassend:
a. eine erste Scheibe (1) und eine zweite Scheibe (2)
b. einen umlaufenden Abstandshalter (3) zwischen der ersten Scheibe (1) und der zweiten Scheibe (2),
c. eine außen umlaufende Dichtung (5) in einer Lücke (5') zwischen der ersten Scheibe (1), dem Abstandshalter (3) und der zweiten Scheibe (2),
d. ein Vakuumisolierpaneel (6) zwischen der ersten Scheibe (1) und der zweiten Scheibe (2) und dem Abstandshalter (3), **dadurch gekennzeichnet daß**:
e. mindestens eine akustische Isolierplatte (7) auf mindestens einer Oberfläche des Vakuumisolierpaneels (6) angeordnet ist.

2. Isolierverglasung nach Anspruch 1, wobei zwei oder mehrere Vakuumisolierpaneele (6) enthalten sind.

3. Isolierverglasung nach Anspruch 2, wobei zwischen den Vakuumisolierpaneelen (6) eine akustische Trennplatte (4) angeordnet ist.

4. Isolierverglasung nach einem der Ansprüche 1 bis 3, wobei mindestens eine akustische Isolierplatte (7) zwischen der zweiten Scheibe (2) und dem Vakuumisolierpaneel (6) und/oder zwischen dem Abstandshalter (3) und dem Vakuumisolierpaneel (6) angeordnet ist.

5. Isolierverglasung nach einem der Ansprüche 1 bis 4, wobei die akustische Isolierplatte (7) eine Dicke von 0,5 mm bis 5 mm aufweist.

6. Isolierverglasung nach einem der Ansprüche 1 bis 5, wobei die akustische Isolierplatte (7) und/oder die akustische Trennplatte (4) thermoplastische, elastische oder duroplastische Polymerschäume, bevorzugt Polystyrol, Polyurethane, Polyethylen, Polyvinylchlorid, Melaminharz, PUR-Weich und/oder PUR-Hart oder Gemische und/oder Copolymere davon enthalten.

7. Isolierverglasung nach einem der Ansprüche 1 bis 6, wobei das Vakuumisolierpaneel (6) ein Füllmittel (8), bevorzugt Pulver, Granulate, Fasern oder Federn, besonders bevorzugt SiO₂ oder Aerogelpulver enthält.

8. Isolierverglasung nach Anspruch 7, wobei das Füllmittel (8) einen mittleren Durchmesser von 10 nm bis 100 µm aufweist.

9. Isolierverglasung nach einem der Ansprüche 1 bis 8, wobei das Vakuumisolierpaneel (6) eine gas- und feuchtigkeitsdichte Folie (9) umfasst.

10. Isolierverglasung nach einem der Ansprüche 1 bis 9, wobei die Dichtung (5) bevorzugt Polymere oder silanmodifizierte Polymere, besonders bevorzugt organische Polysulfide, Silikone, RTV (raumtemperturvernetzenden)-Silikonkautschuk, HTV-(hochtemperturvernetzenden) Silikonkautschuk, peroxidischvernetzten-Silikonkautschuk und/oder additionsvernetzten-Silikonkautschuk, Polyurethane, Buthylkautschuk und/oder Polyacrylate enthält.

11. Isolierverglasung nach einem der Ansprüche 1 bis 10, wobei die Dichtung (5) eine Dicke von 1 mm bis 5 mm und/oder eine Höhe von 15 mm bis 30 mm aufweist.

12. Isolierverglasung nach einem der Ansprüche 1 bis 11, wobei der Abstandshalter (3) ein Trockenmittel, bevorzugt Kieselgel, CaCl₂, Na₂SO₄, Aktivkohle, Silikate, Bentonite, Zeolithe und/oder Gemische davon enthält.

13. Verfahren zur Herstellung einer schallgedämpften Isolierverglasung, wobei
a. ein Abstandshalter (3) umlaufend auf dem Rand einer ersten Scheibe (1) angeordnet wird,
b. eine akustische Isolierplatte (7) innerhalb des Abstandshalters (3) auf der ersten Scheibe (1) angeordnet wird,
c. ein Vakuumisolierpaneel (6) auf der akustischen Isolierplatte (7) angeordnet wird,
d. eine zweite Scheibe (2) auf dem Abstandshalter (3) angeordnet wird und zusammen mit einer Dichtung (5) in einer Lücke zwischen der ersten Scheibe (1), dem Abstandshalter (3) und der zweiten Scheibe (2) zu einer Isolierverglasung verbunden wird.

14. Verfahren nach Anspruch 13, wobei das Vakuumisolierpaneel (6) mehr als eine akustische Isolierplatte (7) auf den Oberflächen aufweist bevor die zweite Scheibe (2) auf den Abstandshalter (3) angeordnet wird.

15. Verwendung der Isolierverglasung nach einem der Ansprüche 1 bis 12 in Gebäuden, bevorzugt in Innen- und Außenfassaden, besonders bevorzugt in nicht transparenten Außenfassaden.

## Claims

1. Sound-damped insulating glazing comprising at least:
a. a first pane (1) and a second pane (2)
b. a peripheral spacer (3) between the first pane (1) and the second pane (2),
c. an externally encircling seal (5) in a gap (5') between the first pane (1), the spacer (3), and the second pane (2),
d. a vacuum insulating panel (6) between the first pane (1) and the second pane (2) and the spacer (3), **characterized in that**:
e. at least one acoustic insulating plate (7) is arranged on at least one surface of the vacuum insulating panel (6).

2. Insulating glazing according to claim 1, wherein two or more vacuum insulating panels (6) are included.

3. Insulating glazing according to claim 2, wherein an acoustic dividing plate (4) is arranged between the vacuum insulating panels (6).

4. Insulating glazing according to one of claims 1 through 3, wherein at least one acoustic insulating plate (7) is arranged between the second pane (2) and the vacuum insulating panel (6) and/or between the spacer (3) and the vacuum insulating panel (6).

5. Insulating glazing according to one of claims 1 through 4, wherein the acoustic insulating plate (7) has a thickness of 0.5 mm to 5 mm.

6. Insulating glazing according to one of claims 1 through 5, wherein the acoustic insulating plate (7) and/or the acoustic dividing plate (4) contain thermoplastic, elastic, or duroplastic polymer foams, preferably polystyrene, polyurethanes, polyethylene, polyvinyl chloride, melamine resin, soft PUR, and/or hard PUR or mixtures and/or copolymers thereof.

7. Insulating glazing according to one of claims 1 through 6, wherein the vacuum insulating panel (6) contains a filler (8), preferably powders, granulates, fibers, or feathers, particularly preferably, SiO₂ or aerogel powder.

8. Insulating glazing according to claim 7, wherein the filler (8) has a mean diameter of 10 nm to 100 µm.

9. Insulating glazing according to one of claims 1 through 8, wherein the vacuum insulating panel (6) includes a gas- and moisture-tight film (9).

10. Insulating glazing according to one of claims 1 through 9, wherein the seal (5) includes preferably polymers or silane-modified polymers, particularly preferably organic polysulfides, silicones, RTV (room temperature vulcanizing) silicone rubber, HTV (high temperature vulcanizing) silicone rubber, peroxide vulcanizing silicone rubber, and/or addition vulcanizing silicone rubber, polyurethanes, butyl rubber, and/or polyacrylates.

11. Insulating glazing according to one of claims 1 through 10, wherein the seal (5) has a thickness of 1 mm to 5 mm and/or a height of 15 mm to 30 mm.

12. Insulating glazing according to one of claims 1 through 11, wherein the spacer (3) contains a desiccant, preferably silica gel, CaCl₂, Na₂SO₄, activated carbon, silicates, bentonites, zeolites, and/or mixtures thereof.

13. Method for producing a sound-damped insulating glazing, wherein
a. a spacer (3) is arranged peripherally on the edge of a first pane (1),
b. an acoustic insulating plate (7) is arranged inside the spacer (3) on the first pane (1),
c. a vacuum insulating panel (6) is arranged on the acoustic insulating plate (7),
d. a second pane (2) is arranged on the spacer (3) and is bonded together with a seal (5) in a gap between the first pane (1), the spacer (3), and the second pane (2) to form an insulating glazing.

14. Method according to claim 13, wherein the vacuum insulating panel (6) has more than one acoustic insulating plate (7) on the surfaces before the second pane (2) is arranged on the spacer (3).

15. Use of the insulating glazing according to one of claims 1 through 12 in buildings, preferably in interior and exterior façades, particularly preferably in nontransparent exterior façades.

## Revendications

1. Vitrage isolant à amortissement phonique comprenant au moins :
a. une première vitre (1) et une seconde vitre (2) ;
b. une entretoise périphérique (3) placée entre la première vitre (1) et la seconde vitre (2) ;
c. une garniture d'étanchéité périphérique extérieure (5) placée dans un creux (5') situé entre la première vitre (1), l'entretoise (3) et la seconde vitre (2) ;
d. un panneau isolant sous vide (6) placé entre la première vitre (1) la seconde vitre (2) et l'entretoise (3), **caractérisé par le fait que** :
e. au moins une plaque isolante acoustique (7) est disposée sur au moins une surface du panneau isolant sous vide (6).

2. Vitrage isolant selon la revendication 1, dans lequel sont contenus deux ou plus de deux panneaux isolants sous vide (6).

3. Vitrage isolant selon la revendication 2, dans lequel une plaque de séparation acoustique (4) est disposée entre les panneaux isolants sous vide (6).

4. Vitrage isolant selon l'une des revendications 1 à 3, dans lequel au moins une plaque isolante acoustique (7) est disposée entre la seconde vitre (2) et le panneau isolant sous vide (6) et/ou entre l'entretoise (3) et le panneau isolant sous vide (6).

5. Vitrage isolant selon l'une des revendications 1 à 4, dans lequel la plaque isolante acoustique (7) présente une épaisseur de 0,5 mm à 5 mm.

6. Vitrage isolant selon l'une des revendications 1 à 5, dans lequel la plaque isolante acoustique (7) et/ou la plaque de séparation acoustique (4) contient ou contiennent des mousses de polymères thermoplastiques, élastiques ou duroplastes, de préférence du polystyrène, du polyuréthane, du polyéthylène, du poly(chlorure de vinyle), une résine de mélamine, du polyuréthane mou et/ou du polyuréthane dur, ou leurs mélanges et/ou copolymères.

7. Vitrage isolant selon l'une des revendications 1 à 6, dans lequel le panneau isolant sous vide (6) contient une charge (8), de préférence une poudre, des granulés, des fibres ou des plumes, dans une mesure particulièrement préférée, SiO₂ ou une poudre d'aérogel.

8. Vitrage isolant selon la revendication 7, dans lequel la charge (8) présente un diamètre moyen de 10 nm à 100 µm.

9. Vitrage isolant selon l'une des revendications 1 à 8, dans lequel le panneau isolant sous vide (6) est enveloppé dans un film (9) étanche aux gaz et à l'humidité.

10. Vitrage isolant selon l'une des revendications 1 à 9, dans lequel la garniture d'étanchéité (5) contient de préférence des polymères ou des polymères modifiés par silane, dans une mesure particulièrement préférée, des polysulfures organiques, des silicones, du caoutchouc silicone RTV (réticulant à la température ambiante), du caoutchouc silicone HTV (réticulant à haute température), du caoutchouc silicone, du caoutchouc silicone réticulé par peroxyde et/ou du caoutchouc silicone réticulé par addition, des polyuréthanes, du caoutchouc butyle et/ou des polyacrylates.

11. Vitrage isolant selon l'une des revendications 1 à 10, dans lequel la garniture d'étanchéité (5) présente une épaisseur de 1 mm à 5 mm et/ou une hauteur de 15 mm à 30 mm.

12. Vitrage isolant selon l'une des revendications 1 à 11, dans lequel l'entretoise (3) contient un agent déshydratant, de préférence du gel de silice, du CaCl₂, du Na₂SO₄, du charbon actif, des silicates, de la bentonite, de la zéolithe et/ou leurs mélanges de ces substances.

13. Procédé de fabrication d'un vitrage isolant à amortissement phonique, dans lequel
a. une entretoise (3) est disposée en périphérie sur le bord d'une première vitre (1) ;
b. une plaque isolante acoustique (7) est disposée à l'intérieur par rapport à l'entretoise (3), sur la première vitre (1) ;
c. un panneau isolant sous vide (6) est disposé sur la plaque isolante acoustique (7);
d. une seconde vitre (2) est disposée sur l'entretoise (3) et est assemblée à une garniture d'étanchéité (5) située à l'intérieur d'un creux existant entre la première vitre (1), l'entretoise (3) et la seconde vitre (2) pour former un vitrage isolant.

14. Procédé selon la revendication 13, dans lequel le panneau isolant sous vide (6) présente plus d'une plaque isolante acoustique (7) sur les surfaces avant que la seconde vitre (2) soit disposée sur l'entretoise (3).

15. Utilisation du vitrage isolant selon l'une des revendications 1 à 12 dans des bâtiments, de préférence dans des façades intérieures et extérieures, dans une mesure particulièrement préférée, dans des façades extérieures non transparentes.
